Europäisches Patentamt

European Patent Office

Office européen des brevets

(19)

(11) Veröffentlichungsnummer: **0 139 301**
**B1**

(12) # EUROPÄISCHE PATENTSCHRIFT

(45) Veröffentlichungstag der Patentschrift:
**13.07.88**

(51) Int. Cl.⁴: **H 01 H 35/42,** H 01 H 61/02,
**H 01 H 83/04**

(21) Anmeldenummer: **84112618.8**

(22) Anmeldetag: **19.10.84**

(54) Schutzeinrichtung in elektrischen Geräten mit einem auf leitfähige Flüssigkeiten ansprechenden Sensor.

(30) Priorität: **26.10.83 DE 3338821**

(43) Veröffentlichungstag der Anmeldung:
**02.05.85 Patentblatt 85/18**

(45) Bekanntmachung des Hinweises auf die Patenterteilung:
**13.07.88 Patentblatt 88/28**

(84) Benannte Vertragsstaaten:
**CH FR GB IT LI**

(56) Entgegenhaltungen:
**EP - A - 0 049 870**
**EP - A - 0 088 390**
**DE - A - 2 220 264**
**DE - A - 3 208 147**

(73) Patentinhaber: **ROBERT KRUPS STIFTUNG & CO. KG.,
Heresbachstrasse 29, D-5650 Solingen 19 (DE)**

(72) Erfinder: **Mahlich, Gotthard Ch., Dipl.-Ing., Auf dem
Kämpchen 29, D-5650 Solingen 11 (DE)**
Erfinder: **Vogelsang, Bernd, Dipl.-Ing., Mühlendamm 38,
D-5650 Solingen 25 (DE)**

(74) Vertreter: **Buse, Karl Georg, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2 (DE)**

## Beschreibung

Die Erfindung bezieht sich auf eine Schutzeinrichtung in elektrischen Geräten der im Gattungsbegriff des Anspruches 1 genannten Art. Diese Geräte (EP-A1-00 88 390) haben sich zwar bewährt, stellen aber, vor allem nach längerer Gebrauchszeit des elektrischen Gerätes, nicht sicher, ob bei Eintritt einer leitfähigen Flüssigkeit ins Gerätegehäuse der Schutzschalter tatsächlich ausgelöst wird. Dies kann nur im Nachhinein festgestellt werden, wenn trotz eindringender Flüssigkeit ein elektrischer Unfall vermieden worden ist. Damit ist zwar die Funktionsfähigkeit der Schutzeinrichtung erwiesen, doch ist durch Zerstören des schmelzfähigen Werkstoffs der Schutzschalter unbrauchbar geworden, was irreversibel ist. Die Schutzeinrichtung ist nicht mehr verwendbar und muss ersetzt oder zumindest repariert werden, damit das elektrische Gerät wieder betriebsfähig wird. Dann ist aber wieder die Funktionsfähigkeit der neuen Schutzeinrichtung fraglich. Ein Versagen der Schutzeinrichtung kann durch Defekte in der elektrischen Schutzschaltung oder im mechanischen Schutzschalter sich ergeben.

Es ist ferner eine Überhitzungsschutz- oder -anzeigevorrichtung bekannt (DE-A-2 220 264). Diese bekannte Vorrichtung weist einen Schalter und einen Schaltkörper zur Betätigung des Schalters auf. Der Schaltkörper ist dabei in einem Gehäuse montiert und dabei in seiner unwirksamen Lage durch ein Halteelement vom Schalter entfernt gehalten. Das Halteelement ist aus einem bei einer bestimmten Temperatur schmelzenden Material, wie Wismut, hergestellt. Der Schaltkörper wirkt mit einer zwischen ihm und einer Wand des Halters angeordneten Feder zusammen, die so ausgebildet ist, dass sie den Schaltkörper in Eingriff mit dem Schalter bringt, wenn sie durch Schmelzen des Halteelementes freigesetzt wird. Der Schaltkörper ist aus einem elektrisch isolierenden Material, wie Porzellan hergestellt und hat einen axial angeordneten Kegelzapfen. Die Spitze des Kegelzapfens liegt in der unwirksamen Lage in Abstand von elastischen und leitenden Kontaktzungen, die in einem Kontaktbereich gegeneinander drücken. Bei Erreichen der Schmelztemperatur des Halteelementes schmilzt dieses und gibt damit den Schaltkörper frei, der unter der Einwirkung der ihn belastenden Feder gegen den Schalter bewegt wird und die Kontaktzungen auseinanderdrückt, so dass der Kontakt zwischen diesen Kontaktzungen unterbrochen ist.

Der Erfindung liegt die Aufgabe zugrunde, eine einfache, preiswerte Schutzeinrichtung der im Gattungsbegriff genannten Art zu entwickeln, deren zuverlässige Wirksamkeit bei einem etwaigen elektrischen Unfall mit Sicherheit vorausgesagt werden kann. Dies wird bei dieser Schutzeinrichtung erfindungsgemäss durch die im Kennzeichen des Anspruches 1 angeführten Massnahmen erreicht.

Durch die Erfindung ist es möglich, ohne dass leitfähige Flüssigkeiten in das Gerätegehäuse hineingelangen müssen, durch Betätigung des Testschalters einen solchen Unfall gefahrlos an der Schutzeinrichtung zu simulieren, ohne dass der schmelzfähige Werkstoff zerstört und dadurch der Schutzschalter in seine irreversible Ausschaltstellung überführt wird. Durch die Koppelung der Testschalterbetätigung mit einer vorausgehend ablaufenden Betätigung eines Hauptschalters wird die unmittelbare Verbindung der Zündschaltung mit dem elektrischen Netz getrennt und stattdessen eine mittelbare, hochohmige Verbindung über eine Nebenleitung geschaffen. Diese hochohmige Verbindung in der Nebenleitung braucht nicht unbedingt vom Hauptschalter erst im Testfall hergestellt zu werden, sondern kann von vornherein als eine Parallelleitung zu der vom Hauptschalter zu unterbrechenden Verbindung zwischen der Versorgungsleitung und der Zündschaltung bestehen. Es fliesst im Testfall ein gegenüber dem den schmelzfähigen Werkstoff zerstörenden hohen Schmelzheizstrom ein den Werkstoff auf geringere Temperatur erwärmender Heizstrom in der Zündschaltung, der nur bei voller Funktionsfähigkeit der elektrischen Bauteile in definierter Höhe anfällt. Ist dies der Fall, so wird eine Kontrollanzeige wirksam gesetzt, die den einwandfreien Zustand der Schutzeinrichtung im elektrischen Gerät kundbar macht.

Für das einwandfreie und schnelle Ansprechen der Schutzeinrichtung ist es sehr vorteilhaft, einen Schutzschalter zu verwenden, dessen Schutzkontakte in der normalerweise vorliegenden Einschaltstellung im Berührungssinne gegeneinander federbelastet sind und als Triebmittel einen Trennkeil aus Isolationsmaterial zu verwenden, der in dieser Einschaltstellung ausserhalb des Berührungsbereiches der Schutzkontakte sich befindet. Der Trennkeil ist zwar kraftbelastet, um selbsttätig in den Berührungsbereich zwischen den Kontakten einfahren zu können, doch ist diese Einfahrbewegung durch den schmelzfähigen Werkstoff unwirksam gemacht. Dies erfolgt, indem der Trennkeil entgegen seiner Kraftbelastung in Ruhelage ausserhalb des Berührungsbereiches der Kontakte durch den schmelzfähigen Werkstoff festgehalten wird. Nach der Zündung schnellt der Trennkeil zwischen die Kontakte, treibt sie in Ausschaltstellung und verhindert von vornherein einen sonst zwischen den sich öffnenden Kontaktenden entstehenden Lichtbogen.

Der schmelzfähige Werkstoff kann als leitender Werkstoff ein den Heizstrom führender Draht sein und daher selbst das elektrische Heizglied der Zündschaltung bilden. Alternativ besteht aber auch die Möglichkeit, den schmelzfähigen Werkstoff als Kleber anzuwenden, der den vorerwähnten Trennkeil in der Ruhelage mit einem elektrischen Heizglied der Zündschaltung verbindet, z.B. einem erwärmbaren Widerstand. Dieser schmelzfähige Werkstoff wird dann im Zündungsfall mittelbar durch die Erwärmung des Heizgliedes zerstört.

Es wird hingewiesen auf die EP-A1-0 144 660 desselben Anmelders mit demselben Prioritätsdatum betreffend ein elektrisches Anschlussgerät, wie Steckdose, für elektrische Verbraucher.

In den Zeichnungen ist die Erfindung in einem Ausführungsbeispiel dargestellt. Es zeigen:

Fig. 1 in Draufsicht ein Teilstück der einen Schale eines Gerätegehäuses eines elektrischen Verbrauchers, wo die Einbaulage der erfindungsgemässen Schutzeinrichtung gezeigt ist,

Fig. 2 in schematischer Draufsicht die Inneneinsicht eines Teilstücks des Gerätegehäuses eines beispielsweise als Haartrockner ausgebildeten elektrischen Verbrauchers,

Fig. 3 die zur erfindungsgemässen Schutzeinrichtung gehörende Schaltung,

Fig. 4 schematisch die Schnittansicht durch einen bei der erfindungsgemässen Schutzeinrichtung verwendeten selbstöffnenden mechanischen Schalter in dessen Einschaltstellung, wobei die Schnittführung längs der Schnittlinie IV–IV von Fig. 5 genommen ist,

Fig. 5 die Draufsicht auf den Schutzschalter von Fig. 5, ebenfalls in dessen Einschaltstellung, und

Fig. 6 eine der Fig. 4 entsprechende Schnittansicht durch den Schutzschalter, wenn er sich in seiner Ausschaltstellung befindet.

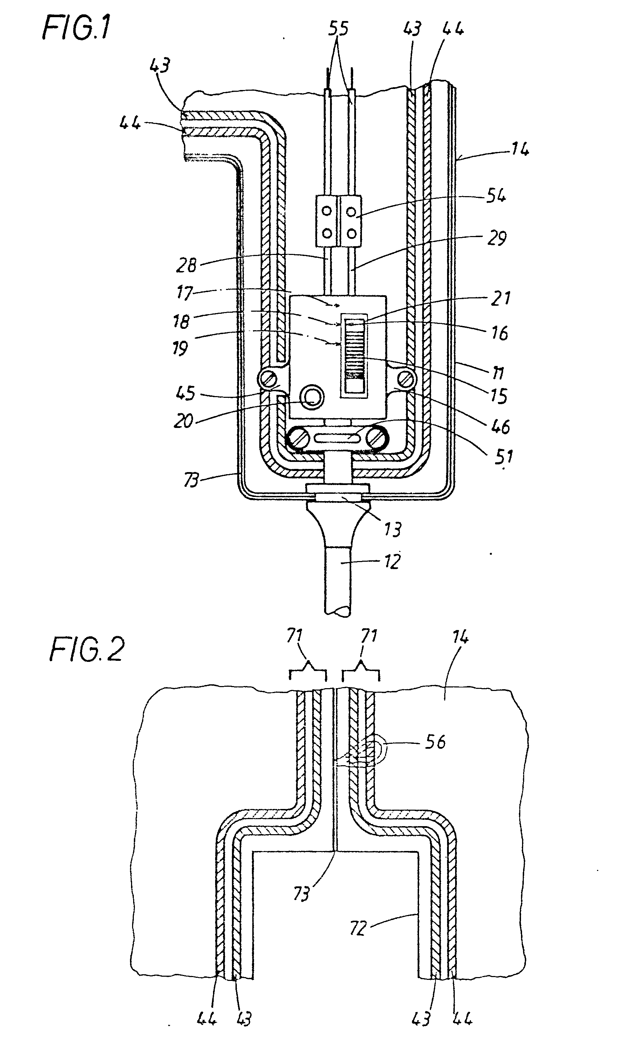

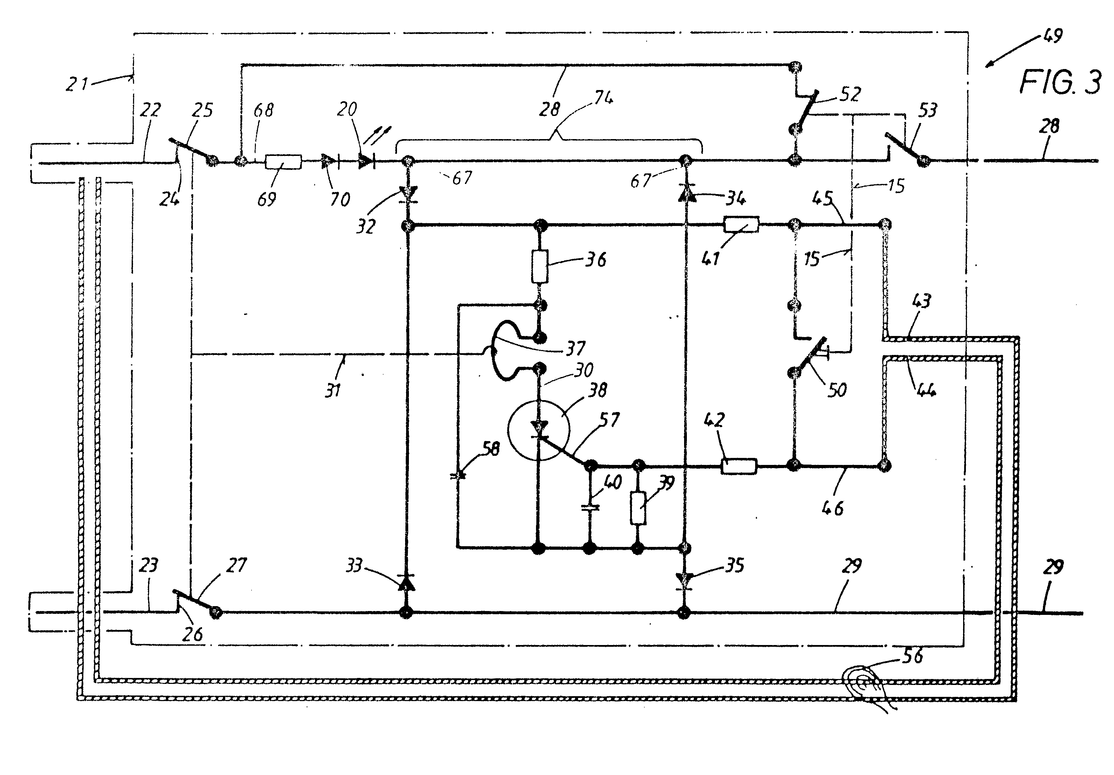

Das in Fig. 1 und 2 gezeigte elektrische Gerät ist ein elektrischer Verbraucher in Form eines Haushaltsgeräts, nämlich ein Haartrockner. Von dem Gehäuse 14 ist die obere Gehäusehälfte entfernt und man hat einen Einblick auf die untere Gehäusehälfte 11. Ein Netzkabel 12 ist über eine Durchführungstülle 13 in eine hermetisch abgedichtete Kapsel 21 eingeführt, worin die aus Fig. 3 ersichtliche Schutzeinrichtung 49 sich befindet. Eine Zugentlastungsschnelle 51 hält das Kabel 12 fest. Das Kabel enthält, wie näher aus Fig. 3 zu erkennen ist, zwei Netzleitungen 22, 23, die mit der Kapselung 21 abgedichtet sind, während aus der durch die Strichpunktlinie dort angedeuteten Kapsel 21 die auch in Fig. 1 ersichtlichen Versorgungsleitungen 28, 29 herausgeführt und an einer im Gehäuse 14 sitzenden Klemme 54 angeschlossen sind, an welcher dann auch die entsprechenden Verbraucherleitungen 55 angreifen.

Im vorliegenden Fall sind diverse, anhand der Fig. 3 noch näher zu beschreibende Schalter 50, 52, 53 mit in die Kapsel 21 integriert, von denen, wie Fig. 1 zeigt, lediglich ein die Schalter gemeinsam betätigende Schalthandhabe 15 in Form eines Schiebers herausgeführt ist und in eine entsprechende Führung in der nicht gezeigten oberen Gehäusehälfte eingreift. Die Schalthandhabe 15 besitzt eine Stellmarke 16, mit welcher sie gegenüber entsprechenden Ablesemarken 17, 18, 19 auf der nicht sichtbaren oberen Gehäusehälfte verstellbar ist. Die Marken sind in Fig. 1 zur Verdeutlichung lediglich gestrichelt angedeutet und bezeichnen drei verschiedene Arbeitspositionen der Schutzeinrichtung. Ausserdem befindet sich an der Kapsel 21 auch noch eine Kontroll-Leuchte 20, die durch eine entsprechende Öffnung in der nicht dargestellten oberen Gehäusehälfte hindurchgeführt ist.

Ausweislich der Fig. 3 führen die Netzleitungen 22, 23 auf der Eingangsseite der Einrichtung 49 zunächst zu jeweiligen Schutzkontakten 24, 25 bzw. 26, 27 eines selbstöffnenden mechanischen Schalters 31, dessen zusammengehörige Bestandteile in Fig. 3 durch die gestrichelte Wirklinie 31 angedeutet sind. Hinter den Schaltkontakten sind die bereits erwähnten Versorgungsleitungen 28, 29 weitergeführt, die einerseits eine Zündschaltung 74 mit Spannung versorgen und andererseits bis zur Anschlussklemme 54 der Verbraucherleitungen 55 weitergeführt sind. Sind die Schutzkontakte 24 bis 27 geöffnet, so ist sowohl die Zündschaltung 74 als auch der elektrische Verbraucher vollkommen spannungsfrei. Im Normalfall, solange kein elektrischer Unfall sich ereignet hat, befinden sich die Schaltkontakte 24 bis 27 stets in der aus Fig. 3 bzw. 4 und 5 ersichtlichen Einschaltstellung.

Die Zündschaltung 74 umfasst eine Brücke mit Dioden 32, 33, 34, 35, in deren Diagonalen 30 nach einem Vorwiderstand 36 ein aus einem schmelzfähigen Draht 37 bestehendes Heizglied und ein Thyristor 38 geschaltet sind. In einer Parallelleitung zum Schmelzdraht 37 und Thyristor 38 befindet sich ein Schutzkondensator 58, der ein Überkopfzünden des Thyristors 38 durch zu hohe $\frac{du}{dt}$-Werte verhindert.

An die Gate-Leitung 57 des Thyristors 38 sind weiterhin ein parallel geschalteter Widerstand 39 und Kondensator 40 angeschlossen und dienen zur Absicherung von Störimpulsen. Über zwei hochohmige Widerstände 41, 42 sind Eingangsleitungen 45, 46 angeschlossen, an welchen je ein Leiter 43, 44 einer offenen elektrischen Doppelleitung sitzt.

Die Doppelleitung 43, 44 ist an den bei bestimmungsgemässer Handhabung des elektrischen Geräts unzugänglichen Randbereichen 71 von Gehäuseöffnungen 72 und/oder Gehäusefugen 73 entlanggeführt. Diese Doppelleitungen 43, 44 können z.B. aus aufgedruckten leitenden Streifen bestehen, die auf der Innenflächenseite des Gehäuses 14 entlang laufen, zueinander isoliert und soweit gegenüber den Gehäusekanten zurückgesetzt sind, dass sie die vorgeschriebenen Luftwege und Kriechwege einhalten. Die Schutzeinrichtung nach der Erfindung ist in folgenden drei Arbeitspositionen wirksam:

Im Gebrauchsfall des elektrischen Geräts 10 ist die Schalthandhabe 15 mit ihrer Stellmarke 16 in die durch die Ablesemarke 17 gekennzeichnete oberste Arbeitsposition verschoben, die auf der nicht sichtbaren oberen Gehäusehälfte mit der Bezeichnung «EIN» gekennzeichnet werden kann. In der Schutzeinrichtung 49 von Fig. 3 ist die Handhabe symbolisch durch die eine Koppelung andeutende Strichelung 15 zwischen den bereits erwähnten Schaltern 50, 52, 53 verdeutlicht. Schaltungsmässig wirkt sich diese Arbeitsposition «EIN» dadurch aus, dass sowohl ein zwischen der einen Versorgungsleitung 28 und der Zündschaltung 74 im Bereich der erwähnten Brücke geschalteter Hauptschalter 52 leitend geschlossen ist, wie ein in der weiterführenden Versorgungsleitung 28 liegender Geräteschalter 53. In dieser Arbeitsposition «EIN» ist aber ein Testschalter 50 geöffnet, der einerends mit der Eingangsleitung 45 und anderends mit der Eingangsleitung 46 der Zündschaltung 74 verbunden ist. Solange die Doppelleitungen 43, 44 nicht die Anwesenheit leitender Flüssigkeit anzeigen, ist der Thyristor 38 gesperrt. Das elektrische Gerät wird normal betrieben.

Wie bei manchen elektrischen Haushaltsgeräten, z.B. Haartrocknern, üblich ist, könnte ein in zwei oder mehr Betriebslagen überführbarer Geräteschalter 53 verwendet werden. Dazu könnte die Schiebehandhabe 53 noch oberhalb der gekennzeichneten Ablesemarke 17 in weitere Arbeitspositionen verschoben werden, die den Verbraucher in unterschiedliche Spannungsstufen versetzen. Wenn es auch aus baulichen Gründen vorteilhaft erscheint, die genannten Schalter 50, 52, 53 in einem gemeinsamen Gehäuse zusammenzufassen und durch eine einzige Handhabe 15 zu bedienen, so ist dies nicht in jedem Fall zwingend. So wäre es denkbar, einen ausserhalb der Kapselung 16 angeordneten Geräteschalter 53 zu verwenden, der in unterschiedliche Betriebslagen schaltbar ist, wie auch der Testschalter 50 und die Kontroll-Leuchte 20 ausserhalb der Kapselung 21 angeordnet sein könnten.

Kommt in der oben beschriebenen Arbeitsposition «EIN» eine elektrisch leitende Flüssigkeit, wie das in Fig. 2 und 3 durch einen Tropfen 56 angedeutete Wasser zwischen die beiden Doppelleitungen 43, 44, so wird der dazwischenliegende Scheinwiderstand erniedrigt und es gelangt Spannung in die Gate-Leitung 57 des Thyristors 38, die ihn zünden lässt. Jetzt fliesst ein grosser Strom von z.B. 2 A durch die Diagonalleitung 30 zwischen den beiden Versorgungsleitungen 28, 29 und bringt den Draht 37 zum Schmelzen. Durch die bereits erwähnte gestrichelte Wirkverbindung eines damit ausgerüsteten selbstöffnenden mechanischen Schalters 31 werden die beiden Schutzkontakte 25, 27 nahezu augenblicklich geöffnet, wodurch die Stromversorgung sowohl zum Verbraucher als auch zur Zündschaltung 74 unterbrochen ist.

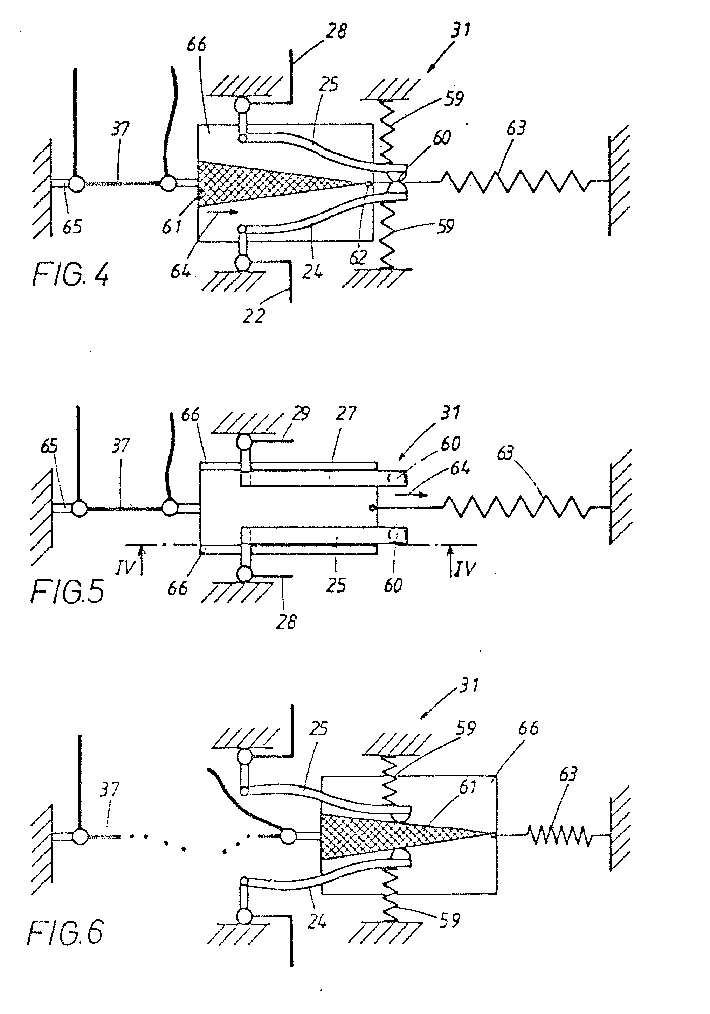

Die ausserordentlich schnelle Reaktion dieses Schalters 31 ergibt sich durch die aus Fig. 4 bis 6 ersichtliche Gestaltung. In den Fig. 4 bis 6 sind der besseren Übersicht wegen nur die wesentlichsten Bestandteile schematisch dargestellt.

Der Schalter 31 befindet sich normalerweise immer in der Einschaltstellung gemäss Fig. 4 und 5. Seine mechanisch beweglichen Schutzkontakte 24 bis 27 werden jeweils durch eine Federbelastung 59 gegeneinander gedrückt gehalten; es liegt die Berührungslage vor. In Ausrichtung mit der Berührungsstelle 60 der Kontaktenden ist der Bewegungsweg der Keilspitze 62 eines aus Isolationsmaterial bestehenden Trennkeils 61 angeordnet. Der Trennkeil 61 ist zwar immer bestrebt, aufgrund einer z.B. von einer Feder 63 ausgehenden Kraftbelastung im Sinne des Bewegungspfeils 64 sich in die Berührungsstelle 60 hineinzubewegen, doch ist der Keil 61 daran durch den Schmelzdraht 37 gehindert. Das eine Drahtende ist am Trennkeil 61 befestigt, während das andere Drahtende einen festen Verankerungspunkt 65 besitzt. Der Trennkeil 61 ist folglich normalerweise, seiner Kraftbelastung 63 entgegen, in einer Ruhelage ausserhalb des Berührungsbereichs 60 der Kontaktenden gehalten.

Zündet der Thyristor 38 den oben erwähnten hohen Heizstrom, so ergeben sich im Schalter 31 die aus Fig. 6 ersichtlichen Verhältnisse. Der Schmelzdraht 37 wird zerstört, der Trennkeil 61 folglich freigegeben, so dass er sich unter Entspannung der auf ihn wirkenden Kraftbelastung 63 in den Berührungsbereich 60 zwischen die Kontaktenden bewegen und diese, der Federbelastung 59 entgegen, auseinanderdrücken kann. Der Trennkeil 61 schiebt sich also als Trennwand zwischen die Kontaktenden und unterbricht daher von vornherein einen sonst die Ansprechzeit verzögernden Lichtbogen zwischen den sich öffnenden Kontaktenden. Es tritt von vornherein eine Abschirmung der Kontaktenden ein, die augenblicklich elektrisch getrennt werden.

Für diese Einfahrbewegung 64 des Trennkeils 61 können geeignete Leitflächen dienen. Im dargestellten Ausführungsbeispiel werden hierzu Seitenflansche 66 am Trennkeil 61 verwendet, die längs der Schutzkontakte 24 bis 27 geführt werden. Es sind auch andere Führungsmittel, wie Gleitschienen denkbar.

Die Schalthandhabe 15 kann, gemäss Fig. 1, alternativ auch noch in die durch die angedeutete Ablesemarke 18 gekennzeichnete Arbeitsposition verschoben werden, die auf der entfernten oberen Gehäusehälfte mit der Bezeichnung «AUS» gekennzeichnet sein kann. In diesem Fall hat die Handhabe 15 den Geräteschalter 53 geöffnet, während der Hauptschalter 52 immer noch geschlossen und der Testschalter 50 immer noch geöffnet sind. Der Geräteschalter 53 könnte, im Gegensatz zum Ausführungsbeispiel von Fig. 3, auch noch die andere Versorgungsleitung 29 unterbrechen, doch bedarf es dieses Aufwands nicht. Auch wenn die Versorgungsleitung 29 stromführend bleibt, ist ein elektrischer Unfall mit der erfindungsgemässen Zündschaltung 74 zuverlässig verhindert. Kommt es nämlich zu einer Flüssigkeitsbenetzung an den Doppelleitungen 43, 44 so bleibt die Zündschaltung 74 über den Hauptschalter 52 unter Spannung und kann in der bereits vorausgehend beschriebenen Weise den Thyristor 38 zünden und den Draht 37 schmelzen, so dass sich der Schalter 31 in der geschilderten Weise öffnet. In dieser Arbeitsposition «AUS» ist der Verbraucher vom Netz abgetrennt.

Die Schalthandhabe 15 kann schliesslich in die in Fig. 1 durch die unterste Ablesemarke 19 angedeutete Arbeitsposition überführt werden, die auf der entfernten oberen Gehäusehälfte mit der Bezeichnung «TEST» gekennzeichnet werden kann. Damit wird in der erfindungsgemässen Schutzschaltung 49 eine besondere Testeinrichtung wirksam gesetzt, die folgende Schaltvorgänge auslöst.

Bei dieser Umstellungsbewegung der Schalthandhabe 15 wird zunächst, zusätzlich zu dem bereits geöffneten Geräteschalter 53, auch noch der Hauptschalter 52 geöffnet, so dass die Zündschaltung 74 nicht mehr unmittelbar mit der Versorgungsleitung 28 verbunden ist. In der Endlage wird schliesslich auch der Testschalter 50 geschlossen, womit die Eingangsleitungen 45, 46 kurzgeschlossen sind. Die obere Anschlussstelle 67 der Zündschaltung 74 ist aber über eine Nebenleitung 68 mittelbar an die Versorgungsleitung 28 angeschlossen, wo ein Begrenzungswiderstand 69, eine Schutzdiode 70 und eine als Kontroll-Leuchte 20 dienende Leuchtdiode in Reihe geschaltet sind. Über den geschlossenen Testschalter 50 wird zwar in diesem Testfall der Thyristor 38 gezündet, doch der dabei sich ergebende Heizstrom ist jetzt soweit erniedrigt, dass der Schmelzdraht 37 sich nicht mehr bis zu seiner Schmelztemperatur erwärmen kann. Der Heizdraht 37 bleibt folglich in diesem Testfall unbeschädigt. Der mechanische Schalter 31 bleibt weiterhin voll funktionsfähig.

Dieser reduzierte Heizstrom fällt dann in einer definierten Höhe an, wenn alle massgeblichen Bauteile der Schutzschaltung 49 ihre volle Funktionsfähigkeit aufweisen. In diesem Fall leuchtet die Diode 20 auf.

Die massgeblichen Schalter 50, 52, 53 können, wie bereits oben erwähnt wurde, auch als zueinander selbständige Schalter ausgebildet sein, wobei durch Verriegelungen od.dgl. dafür gesorgt wird, dass in leitender Verbindung des Hauptschalters 52 der Testschalter 50 stets unterbrochen ist und umgekehrt, bei verbundenem Testschalter 50 der Hauptschalter 52 für eine Unterbrechung sorgt. Dies lässt sich durch gegenseitige Verriegelungen erzielen. Diese Schalter könnten auch als elektronische Schalter ausgebildet sein. Die massgebliche Schaltfolge dieser Schalter 50, 52, 53 ist am besten aus der nachfolgenden Tabelle zu ersehen, wo das Symbol (+) eine leitende Verbindung und das Symbol (−) die nichtleitende Verbindung in der jeweiligen Arbeitsposition anzeigt:

| Arbeitsposition der Schalthandhabe 15 | Hauptschalter 52 | Geräteschalter 53 | Testschalter 50 |
|---|---|---|---|
| «EIN» | (+) | (+) | (−) |
| «AUS» | (+) | (−) | (−) |
| «TEST» | (−) | (−) | (+) |

Mit der Erfindung ist es also möglich, jederzeit die einwandfreie Funktionsfähigkeit der Schutzschaltung 49 zu testen. Dazu braucht lediglich die Schalthandhabe 15 bedient zu werden. Leuchtet dabei die Kontroll-Leuchte 20 auf, so hat man die Gewähr, dass das elektrische Gerät 10 gefahrlos benutzt werden kann. Ein solcher Test kann häufig in beliebiger zeitlicher Folge ausgeführt werden, ohne die Schutzschaltung 49 zu beeinträchtigen.

Die Schalthandhabe 15 könnte durch eine nicht näher gezeigte Rückstellfeder normalerweise in ihrer Arbeitsposition «AUS» gehalten werden. Wird die Schalthandhabe 15 in die Arbeitsposition «TEST» verschoben und dann wieder losgelassen, so bewegt sie sich von selbst wieder in die Ausgangsstellung «AUS» durch die Rückstellfeder zurück. Demgegenüber ist die Arbeitsposition «EIN» verrastet, so dass die Schalthandhabe 15 festgehalten wird. Wie oben bereits erwähnt wurde, könnte natürlich der Geräteschalter 53 unabhängig von dem Testschalter 50 als eigener Bauteil ausgebildet und im elektrischen Gerät 10 getrennt angeordnet sein.

Ausweislich der Fig. 1 können die Eingangsleitungen 45, 46 für den Anschluss der Doppelleiter 43, 44 als seitliche Fortsätze einer die gesamte Schutzschaltung 49 tragenden Leiterplatte aus der Kapsel 21 herausgeführt sein und mit dem Gehäuse durch Verschraubung verbunden werden. Im Bereich der Schrauben befinden sich aber die jeweiligen leitenden Streifen 43, 44, so dass durch die Befestigung der Kapsel 21 gleichzeitig die Kontaktierung mit dem Doppelleiter 43, 44 herbeigeführt wird. Nach dem Auslösen der Schutzeinrichtung kann die Funktionsfähigkeit des elektrischen Geräts 10 leicht wieder dadurch hergestellt werden, dass man das Netzkabel 12 zusammen mit der Kapsel 21 austauscht.

Bezugszeichenliste:
10 elektrisches Gerät, Haartrockner
11 untere Gehäusehälfte
12 Netzkabel
13 Durchführungstülle
14 Gehäuse
15 Schalthandhabe
16 Stellmarke
17 Ablesemarke «EIN»
18 Ablesemarke «AUS»
19 Ablesemarke «TEST»
20 Kontroll-Leuchte, Diode
21 Kapsel
22 Netzleitung
23 Netzleitung
24 Schutzkontakt
25 Schutzkontakt
26 Schutzkontakt
27 Schutzkontakt
28 Versorgungsleitung
29 Versorgungsleitung
30 Brückendiagonale
31 Schutzschalter, Wirklinie
32 Diode
33 Diode
34 Diode
35 Diode

36 Vorwiderstand
37 Schmelzdraht, Heizglied
38 Thyristor
39 Widerstand
40 Kondensator
41 Widerstand
42 Widerstand
43 erste Doppelleitung
44 zweite Doppelleitung
45 Eingangsleitung
46 Eingangsleitung
47
48
49 Schutzeinrichtung
50 Testschalter
51 Zugentlastungsschelle
52 Hauptschalter
53 Geräteschalter
54 Klemme
55 Verbraucherleitung
56 Wassertropfen
57 Gate-Leitung von 38
58 Schutzkondensator
59 Federbelastung
60 Berührungsbereich der Kontaktenden
61 Trennkeil
62 Keilspitze
63 Feder
64 Bewegungspfeil von 61
65 Verankerung von 37
66 Flansch
67 Anschlussstelle
68 Nebenleitung
69 Begrenzungswiderstand
70 Schutzdiode
71 Randbereich
72 Gehäuseöffnung
73 Gehäusefuge
74 Zündschaltung

**Patentansprüche**

1. Schutzeinrichtung (49) in elektrischen Geräten (10), wie elektrischen Verbrauchern,

mit einem auf eindringende leitfähige Flüssigkeiten (56) im Gerätegehäuse (14) ansprechenden Sensor, der aus einem offenen elektrischen Doppelleiter (43, 44) im bei bestimmungsgemässer Handhabung des Geräts (10) unzugänglichen Randbereich (71) von Gehäuseöffnungen (72) und/oder Gehäusefugen (73) besteht und der bei Benetzung mit der eindringenden Flüssigkeit (56) seine Impedanz verändert,

mit einer einen Halbleiterschalter (38) und ein elektrisch aufheizbares Glied (Heizglied 37) aufweisenden elektronischen Zündschaltung (74), an deren Eingang (45, 46) der Doppelleiter (43, 44) liegt und den Halbleiterschalter (38) dann zündet, wenn die Impedanz des Doppelleiters (43, 44) einen vorgegebenen Grenzwert unterschreitet,

mit einem in die Versorgungsleitungen (28, 29) des elektrischen Geräts (10) geschalteten, selbstöffnenden mechanischen Schutzschalter (31), dessen Schutzkontakte (24, 25; 26, 27) in Einschaltstellung zwar stets einem vorgespannten,

sie selbsttätig in Ausschaltstellung überführenden Triebmittel (61) ausgesetzt sind, aber das Triebmittel (61) durch einen schmelzfähigen, im Bereich des Heizglieds angeordneten Werkstoff (37) gehemmt ist,
gekennzeichnet durch

einen am Eingang (45, 46) der Zündschaltung (74) liegenden Testschalter (50) und einen, damit gekoppelten (15) in die Versorgungsleitung (28) geschalteten Hauptschalter (52),

im Testfall der Testschalter (50) zwar den Eingang (45, 46) der Zündschaltung (75) kurz schliesst, vorausgehend aber den Hauptschalter (52) öffnet und eine Begrenzungswiderstände (69, 70) aufweisende Nebenleitung (68) zwischen der unterbrochenen Versorgungsleitung (28) und der Zündschaltung (74) eingeschaltet lässt,

wobei die Begrenzungswiderstände (69, 70) den durch das Heizglied (37) fliessenden Heizstrom soweit reduzieren, dass der schmelzfähige Werkstoff seine Schmelztemperatur nicht erreicht

und nur der bei voller Funktionsfähigkeit der elektrischen Bauelemente (36, 37, 38) in definierter Höhe anfallende Heizstrom eine Kontrollanzeige (20) wirksam setzt.

2. Schutzeinrichtung nach Anspruch 1, dadurch gekennzeichnet, dass in Einschaltstellung die Schutzkontakte (24, 25, 26; 27) des Schutzschalters (31) im Berührungssinne gegeneinander federbelastet (59) sind,

das Triebmittel aus einem in den Berührungsbereich (60) zwischen den Schutzkontakten (24, 25; 26, 27) einfahrenden Trennkeil (61) aus Isolationsmaterial besteht,

dass der Trennkeil (61) zwar im Sinne dieser Einfahrbewegung (64) kraftbelastet (63) ist, aber – in Einschaltstellung der Schutzkontakte – durch den schmelzfähigen Werkstoff (37) in einer Ruhelage ausserhalb des Berührungsbereichs (60) festgehalten ist.

**Claims**

1. A protective device (49) in electrical apparatuses (10) such as electrical loads, comprising a sensor which is responsive to the penetration into the housing (14) of the apparatus of conductive fluids (56) and which comprises an open electrical double conductor (43, 44) in the edge region (71), which is inaccessible in normal handling of the apparatus (10), of openings (72) and/or joins (73) of the housing and which when wetted with the penetrating fluid (56), changes its impedance,

an electronic firing circuit (74) which has a semiconductor switch (38) and an electrically heatable member (heating member 37) and at the input (45, 46) of which the double conductor (43, 44) is disposed and which fires the semiconductor switch (38) when the impedance of the double conductor (43, 44) falls below a predetermined limit value,

a self-opening mechanical circuit breaker (31) which is connected into the supply lines (28, 29) of the electrical apparatus (10) and whose protective contacts (24, 25; 26, 27), in the switched-on position, are admittedly always subjected to a prestressed driving means (61) for moving them automatically into the switched-off position, but the driving means (61) is restrained by a fusible material (37) which is disposed in the region of the heating member,
characterised by

a test switch (50) disposed at the input (45, 46) of the firing circuit (74) and a main switch (52) coupled (15) to the test switch and connected into the supply line (28),

although in the test situation the test switch (50) short circuits the input (45, 46) of the firing circuit (75) it precedingly opens the main switch (52) and cuts in a subsidiary line (68) having limiting resistors (69, 70), between the interrupted supply line (28) and the firing circuit (74),

wherein the limiting resistors (69, 70) reduce the heating current flowing through the heating member (37) to such a degree that the fusible material does not reach its melting temperature,

and only the heating current which occurs when the electrical components (36, 37, 38) are fully operational, at a defined level, sets a monitoring display (20) in operation.

2. A protective device according to claim 1 characterised in that in the switched-on position the protective contacts (24, 25, 26; 27) of the protective switch (31) are spring-loaded (59) towards each other in the direction of contact,

the drive means comprises a separating wedge (61) of insulating material, which moves into the region (60) of contact between the protective contacts (24, 25; 26, 27), and

although the drive wedge (61) is urged by a force (63) in the direction of said movement (64) between said protective contacts, in the switched-on condition of the protective contacts said drive wedge is retained by the fusible material in a rest position outside the contact region (60).

**Revendications**

1. Dispositif protecteur (49) d'appareil électrique (10) comportant:
– un capteur réagissant à la pénétration de liquides conducteurs (56) dans le boîtier d'appareil (14) et constitué par des conducteurs électriques jumelés dénudés (43, 44) disposés dans la zone marginale (71) inaccessible d'ouvertures (72) et/ou des joints (73) du boîtier et susceptible, lors de l'utilisation normale de l'appareil (10), de subir des modifications d'impédance sous l'effet d'un humectage par un liquide pénétrant (56),
– un circuit électronique de déclenchement (74) présentant un commutateur à semiconducteur (38) et un élément de chauffage électrique (élément chauffant 37), circuit sur l'entrée duquel (45, 46) les conducteurs jumelés (43, 44) sont branchés et dans lequel de commutateur à semiconducteur enclenche quand l'impédance desdits conducteurs jumelés (43, 44) devient inférieure à une valeur limite prédéterminée,
– un commutateur de protection mécanique (31) autointerrupteur qui est branché dans les lignes d'alimentation (28, 29) de l'appareil électrique (10) et dont les contacts de protection (24, 25; 26, 27) en position enclenchée sont constamment soumis à l'action d'un organe d'actionnement (61) sollicité élastiquement qui les amène automatiquement en position de déclenchement, mais qui est retenu par un matériau fusible (37) disposé dans la zone de l'élément chauffant,
caractérisé:
– en ce qu'il comporte un commutateur d'essai (50) situé à l'entrée (45, 46) du circuit d'enclenchement (74) et un commutateur principal (52) couplé audit commutateur d'essai et branché dans la ligne d'alimentation (28);
– en ce qu'en cas d'essai, le circuit d'essai (50) ferme pour un court instant l'entrée (45, 46) du circuit d'enclenchement (74), tout en ouvrant au préalable le commutateur principal (52) en laissant à l'état branché un circuit auxiliaire (68) qui comprend des résistances de limitation (69, 70) et qui disposé entre la ligne d'alimentation (28) interrompue et le circuit d'enclenchement (74);
– cependant que les résistances (69, 70) réduisent le courant chauffant parcourant l'élément chauffant (37) suffisamment pour que le matériau fusible n'atteigne pas sa température de fusion;
– et que seul un courant de chauffage d'une valeur telle que déterminée dans des conditions d'aptitude opérationnelle complète des composants électriques (36, 37, 38) provoque une indication de contrôle (20).

2. Dispositif de protection selon la revendication 1, caractérisé en ce que:
– en état enclenché, les contacts de protection (24, 25; 26, 27) du circuit de protection (31) sont sollicités élastiquement l'un contre l'autre dans le sens d'une mise en contact réciproque;
– l'organe d'actionnement comporte un coin de séparation (61) en matériau isolant susceptible d'être inséré entre les contacts de protection (24, 25; 26, 27) dans la zone de contact (60);
– le coin de séparation (61) est soumis à une force (63) agissant dans le sens de l'insertion, cependant que
– dans la position enclenchée des contacts de protection – il est retenu par le matériau fusible (37) dans une position de repos définie à l'extérieur de la zone de contact (60).

FIG.1

FIG.2

FIG.3

FIG. 4

FIG.5

FIG.6